(19) Europäisches Patentamt
European Patent Office
Office européen des brevets

(11) Veröffentlichungsnummer: **0 520 219 A2**

(12) # EUROPÄISCHE PATENTANMELDUNG

(21) Anmeldenummer: **92109349.8**

(22) Anmeldetag: **03.06.92**

(51) Int. Cl.[5]: **C08K 5/13**, C08K 5/3492, C08L 77/00

(30) Priorität: **22.06.91 DE 4120661**

(43) Veröffentlichungstag der Anmeldung: **30.12.92 Patentblatt 92/53**

(84) Benannte Vertragsstaaten: **AT BE CH DE ES FR GB IT LI NL**

(71) Anmelder: **BASF Aktiengesellschaft**
**Carl-Bosch-Strasse 38**
**W-6700 Ludwigshafen(DE)**

(72) Erfinder: **Hurley, James, Dr.**
**Naumburger Weg 4**
**W-6800 Mannheim 31(DE)**
Erfinder: **Goetz, Walter, Dr.**
**Dhauner Strasse 79**
**W-6700 Ludwigshafen(DE)**
Erfinder: **Blinne, Gerd, Dr.**
**Im Woogtal 7**
**W-6719 Bobenheim(DE)**

(54) **Polyamide mit geringer Wasseraufnahmekapazität.**

(57) Thermoplastische Polyamid-Formmassen, enthaltend als wesentliche Komponenten
A) 39 bis 99 Gew.-% eines Polyamids oder eine Mischung verschiedener Polyamide und
B) 1 bis 30 Gew.-% eines Phenols der allgemeinen Formel I

$R_3E$ I,

wobei
R =

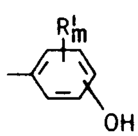 ,

R' = $C_1$-$C_4$-Alkyl, m = 0 bis 4
E = ein trivalenter, aliphatischer $C_1$-$C_{10}$-Kohlenwasserstoffrest, Triazin-triyl, ein dreiwertiger $C_6$- oder $C_{10}$-Aryl-Rest
und
C) 0 bis 60 Gew.%, bezogen auf die Polyamidmenge faser- oder teilchenförmige Füllstoffe oder deren Mischungen.

EP 0 520 219 A2

Die Erfindung betrifft thermoplastische Polyamid-Formmassen, enthaltend als wesentliche Komponenten

A) 39 bis 99 Gew.-% eines Polyamids oder eine Mischung verschiedener Polyamide und

B) 1 bis 30 Gew.-%, bezogen auf die Polyamidmenge eines Phenols der allgemeinen Formel I

$R_3E$ I,

wobei

R =

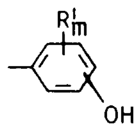

,

R' = $C_1$-$C_4$-Alkyl, m = 0 bis 4

E = ein trivalenter, aliphatischer $C_1$-$C_{10}$-Kohlenwasserstoffrest, Triazin-triyl, ein dreiwertiger $C_6$- oder $C_{10}$-Aryl-Rest

und

c) 0 bis 60 Gew.%, bezogen auf die Polyamidmenge faser- oder teilchenförmige Füllstoffe oder deren Mischungen.

Darüberhinaus betrifft die Erfindung ein Verfahren zur Herstellung sowie die Verwendung derartiger thermoplastischer Formmassen zur Herstellung von Fasern, Folien und Formkörpern und die aus den thermoplastischen Formmassen als wesentlichen Komponenten erhältlichen Formkörper.

Es ist bekannt, daß thermoplastisch verarbeitbare Polyamide die Fähigkeit besitzen Wasser aufzunehmen. Hierbei können jedoch die Festigkeit und die Steifigkeit der Produkte im allgemeinen bis um die Hälfte herabgesetzt werden. Auch führt die Wasseraufnahme in der Regel zu Dimensionsänderungen und damit zu Verzug der Teile. Um die Wasseraufnahme zu verringern, kann man den Polyamiden beispielsweise Phenol-Verbindungen zusetzen. So wird in der EP-A 112 542 die Zugabe von Verbindungen zu Polyamiden beschrieben, die eine phenolische OH-Gruppe enthalten, und in der EP-A 224 847 und in der EP-A 240 887 sind thermoplastisch verarbeitbare Polyamidformmassen beschrieben, denen Bisphenolverbindungen zugesetzt sind. Ein Nachteil beim Einsatz der bisherigen Phenole liegt im wesentlichen in der Flüchtigkeit dieser Stoffe. Dies führt häufig zu Abscheidungen, speziell beim Spritzguß. Hinzu kommt, daß aus toxikologischen Gründen die Flüchtigkeit unerwünscht ist. Ein weiterer Nachteil liegt in der Verringerung der Wärmeformbeständigkeit.

Der Erfindung lag daher die Aufgabe zugrunde, diese Nachteile zu überwinden.

Demgemäß wurden die eingangs definierten thermoplastischen Formmassen gefunden.

Die verwendbaren Polyamide sind an sich bekannt. Beispiele hierfür sind Polyhexamethylenadipinsäureamid, Polyhexamethylenpimelinsäureamid, Polyhexamethylenkorksäureamid, Polyhexamethylenazelainsäureamid, Polyhexamethylensebacinsäureamid, Polyhexamethylendodekandisäureamid, Polyoctamethylenkorksäureamid, Polydodekamethylendodekandisäureamid, Poly-11-aminoundekansäureamid und Bis-(4-aminocyclohexyl)-methandodekansäureamid oder die durch Ringöffnung von Lactamen, z.B. Polycaprolactam oder Polylaurinlactam, erhaltenen Produkte. Auch Polyamide auf der Basis von Terephtal- oder Isophtalsäure als Säurekomponente und/oder Trimethylhexamethylendiamin, Bis-(4-aminocyclohexyl)-methan oder 2,2-Di-(4-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet. Als Beispiel hierfür sei ein Copolykondensat aus Terephtalsäure, Isophtalsäure, Hexamethylendiamin und Caprolactam (PA 6/6T) genannt.

Vorzugsweise setzt man teilkristalline Polyamide ein, bevorzugt PA 6, PA 66, PA 6/6T, PA 66/6T (Copolykondensat aus Hexamethylendiamin, Adipinsäure, Caprolactam, Terephthalsäure und Isophthalsäure) sowie PA 46.

Die Herstellung dieser Polyamide erfolgt in an sich bekannter Weise (s. z.B. Encyclopedia of Polymer Science and Engineering, Vol. 11, S. 315 bis 489, John Wiley & Sons, Inc. 1988.

Im allgemeinen wählt man die Molekulargewichte der Polyamide im Bereich von 8000 bis 50000, bevorzugt von 12000 bis 30000 g/mol (Zahlenmittel des Molekulargewichts).

Das Verhältnis von endständigen Säuregruppen zu endständigen Aminogruppen kann durch Variation des Molverhältnisses der Ausgangsverbindungen gesteuert werden.

Der Anteil des Polyamids in der erfindungsgemäßen Formmasse beträgt 39 bis 99, bevorzugt 50 bis 98

Gew.%.

Der Anteil der Phenole I, $R_3E$, in den thermoplastischen Formmassen beträgt 1 bis 30 Gew.-%, bevorzugt 2 bis 20 Gew.-%.

Als Rest R seien genannt in ortho-, meta- oder para-Stellung substituiertes Hydroxi-Phenyl wie 2-, 3- und 4-Hydroxiphenyl, besonders bevorzugt 2- und 4-Hydroxiphenyl, das 1- bis 4-fach mit $C_1$-$C_4$-Alkylresten wie Methyl, Ethyl, n-Propyl, i-Propyl, n-Butyl, i-Butyl, sek.-Butyl und tert.-Butyl, vorzugsweise Methyl und Ethyl, substituiert sein kann.

Als Rest E kommen trivalente, aliphatische $C_1$-$C_{10}$-Kohlenwasserstoffreste, Triazin-triyl sowie dreiwertige $C_6$-$C_{10}$-Arylreste in Betracht. Beispielhaft seien genannt $C_1$-$C_{10}$-Alkantriyl-Reste wie Methylidin, Ethylidin, 1-Ethyl-2-yliden, 1,2,3-Propantriyl, 1-Propyl-2-yliden, 1-Propyl-3-yliden, Propylidin, Butylidin, 1-Butyl-4-yliden, 2-Butyl-4-yliden, 2-Butyl-1-yliden, 1-Butyl-2-yliden, Pentylidin, 1,3,5-Pentantriyl, Hexylidin, 1,2,6-Hexantriyl, Heptylidin, 1-Heptan-7-yliden, Octylidin, 1-Octyl-8-yliden, Nonylidin, Decylidin, bevorzugt Methylidin, Ethylidin, 1-Ethyl-2-yliden, 1,2,3-Propantriyl, 1-Propyl-2-yliden, Butylidin, 2-Butyl-4-yliden, sowie 1,2,4- und 1,3,5-Triazin-triyle wie 1,2,4-Triazin-3,5,6-triyl, 1,3,5-Triazin-2,4,6-triyl, bevorzugt 1,3,5-Triazin-2,4,6-triyl, sowie trivalente Phenylradikale wie 1,2,4-, 1,2,5-, 1,2,6-, 1,3,4- und 1,3,5-Benzoltriyl, vorzugsweise 1,3,5-Benzoltriyl.

Beispiele für Verbindungen I, denen im Hinblick auf die vorliegende Erfindung besondere Bedeutung zukommt, sind Tris-(p-hydroxyphenyl)methan, Tris-1,1,1-(p-hydroxyphenyl)ethan, Tris-1,1,3-(p-hydroxyphenyl)propan, Tris-1,1,3-(p-hydroxyphenyl)butan, Bis-1,1-(p-hydroxyphenyl)-1-(4-p-hydroxyphenyl)cyclohexyl)-methan,

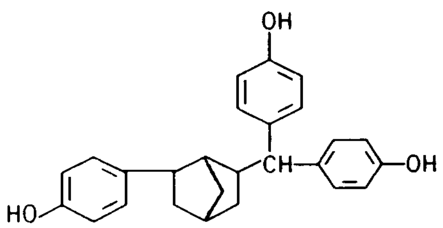

und

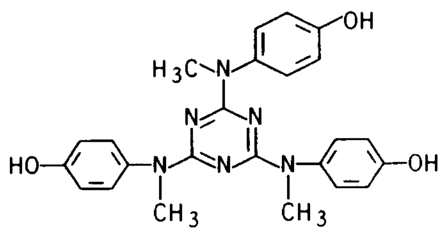

.

Die Herstellung der Phenole I ist an sich bekannt und erfolgt in der Regel durch Kondensation von Aldehyden oder Ketonen mit Phenol oder Phenolverbindungen. So kann man beispielsweise aus Phenol und p-Hydroxyphenylmethyl-keton Tris-1,1,1-(p-hydroxyphenyl)ethan herstellen (s. z.B. Houben-Weyl, Methoden der organischen Chemie, Bd. 6/1c, S. 1021ff). Des weiteren können die Aldehyde oder Ketone olefinisch ungesättigt sein wie Acrolein, oder man kann auch olefinisch ungesättigte Verbindungen wie Diene, beispielsweise Norbornadien und Dicyclopentadien, mit Phenolen zur Reaktion bringen (s. z.B. Houben-Weyl, Methoden der organischen Chemie, Bd. 6/1c, S. 950ff). Die Triazin-Verbindungen kann man beispielsweise aus Cyanurchlorid und Aminophenolen nach bekannten Methoden (s. s-Triazines and Derivatives in The Chemistry of Heterocyclic Compounds, A. Weissberger Ed., Interscience Publishers, 1959, New York, S. 55-57) herstellen.

Als Komponente C) können die erfindungsgemäßen Formmassen 0 bis 60, insbesondere 10 bis 50 Gew.-% eines faser- oder teilchenförmigen Füllstoffes oder Mischungen solcher Füllstoffe enthalten.

Als faserförmige Füllstoffe seien hier nur beispielsweise Glasfasern, Kohlenstoffasern, Aramid-Fasern, Kaliumtitanat-Fasern und faserförmige Silikate wie Wollastonit genannt, bevorzugt Glasfasern.

Bei der Verwendung von Glasfasern können diese zur besseren Verträglichkeit mit dem thermoplastischen Polyamid mit einer Schlichte und einem Haftvermittler ausgerüstet sein.

Im allgemeinen haben die verwendeten Glasfasern einen Durchmesser im Bereich von 6 bis 20 µm. Die Einarbeitung kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 5 mm.

Als teilchenförmige Füllstoffe seien hier nur stellvertretend Glaskugeln, teilchenförmiger Wollastonit, Quarzmehl, Bornitrid, Kaolin, Calciumcarbonat (Kreide), Magnesiumcarbonat und Titandioxid genannt, wovon Wollastonit, Titandioxid und Kaolin im allgemeinen bevorzugt werden.

Neben den wesentlichen Komponenten, Polyamid, (B) und (C), können die erfindungsgemäßen Formmassen übliche Zusatzstoffe und Verarbeitungshilfsmittel enthalten. Deren Anteil beträgt in der Regel bis zu 10 Gew.-%, vorzugsweise bis zu 5 Gew.-%, bezogen auf das Gesamtgewicht der Komponenten Polyamid, (B) und (C).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente, Weichmacher und Flammschutzmittel.

Oxidationsverzögerer und Wärmestabilisatoren, die den thermoplastischen Massen gemäß der Erfindung zugesetzt werden können, sind z.B. Halogenide ausgewählt aus der Gruppe von Metallen der Gruppe I des Periodensystems, z.B. Lithium-, Natrium-, Kalium-Halogenide, und Kupfer-(I)-Halogenide, z.B. Chloride, Bromide oder Iodide, oder Mischungen davon. Weiterhin kann man Zinkfluorid und Zinkchlorid verwenden. Ferner kann man sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzen.

Beispiele für UV-Stabilisatoren sind substituierte Resorcine, Salicylate, Benzotriazole und Benzophenone, die man im allgemeinen in Mengen bis zu 2 Gew.-% einsetzen kann.

Gleit- und Entformungsmittel, die man in der Regel bis zu 1 Gew.-% der thermoplastischen Masse zusetzen kann, sind beispielsweise Stearinsäure, Stearylalkohol, Stearinsäurealkylester und -amide sowie Ester des Pentaerythrits mit langkettigen Fettsäuren.

Als Flammschutzmittel kann man beispielsweise roten oder schwarzen Phosphor oder eine phosphorhaltige Verbindung in Mengen von 3 bis 10 Gew.-% einsetzen.

Bevorzugtes Flammschutzmittel ist elementarer Phosphor, insbesondere in Kombination mit glasfaserverstärkten Formmassen, der in unbehandelter Form eingesetzt werden kann.

Besonderes eignen sich jedoch Zubereitungen, in denen der Phosphor oberflächlich mit niedermolekularen flüssigen Substanzen wie Silikonöl, Paraffinöl oder Estern der Phtalsäure oder Adipinsäure oder mit polymeren oder oligomeren Verbindungen, z.B. mit Phenolharzen oder Aminoplasten sowie Polyurethanen beschichtet sind.

Weitere bevorzugte Flammschutzmittel sind organische Phosphorverbindungen wie die Ester der Phosphorsäure, phosphorigen Säure und von Phosphon- und Phosphinsäure sowie tertiäre Phosphine und Phosphinoxide. Als Beispiel sei Triphenylphosphinoxid genannt. Dieses kann allein oder vermischt mit Hexabrombenzol oder einem chlorierten Biphenyl und, wahlweise, Antimontrioxid verwendet werden.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureamide, Phosphinsäureamide, Tris-(aziridinyl)-phosphinoxid oder Tetrakis-(hydroxymethyl)-phosphoniumchlorid.

Die Herstellung der erfindungsgemäßen Formmassen führt man in der Regel nach an sich bekannten Verfahren durch, indem man die Ausgangskomponenten in üblichen Mischvorrichtungen wie Schneckenextrudern, Brabender-Mühlen oder Banbury-Mühlen mischt und anschließend extrudiert. Nach der Extrusion kühlt man das Extrudat im allgemeinen ab und zerkleinert es. Die Mischtemperaturen wählt man in der Regel im Bereich von 200 bis 350 ° C, bevorzugt von 225 bis 325 ° C.

Die erfindungsgemäßen thermoplastischen Formmassen zeichnen sich gegenüber entsprechenden Formmassen ohne die üblichen Mono- oder Diphenol-Zusätze insbesondere durch eine geringere Wasseraufnahme und eine deutlich verbesserte Oberflächenqualität aus. Hierdurch wird eine Abnahme der Steifigkeit und der Festigkeit verhindert. Im Vergleich zu den entsprechenden Formmassen mit den üblichen Phenol-Zusätzen werden Verbesserungen bezüglich der Steifigkeit, der Festigkeit, der Wärmeformbeständigkeit, der Menge des Oberflächenbelages und der Oberflächenqualität erreicht. Die erfindungsgemäßen Formmassen eignen sich demzufolge zur Herstellung von Formkörpern jeglicher Art, vorzugsweise zur Herstellung von faserverstärkten, besonders glasfaserverstärkten oder mit verstärkenden Füllstoffen versehenen Formmassen.

Beispiel 1

Auf einem Zweischneckenextruder (ZSK 30 von Werner & Pfleiderer) wurden 20 kg/h Polycaprolactam mit einem mittleren Molekulargewicht (Zahlenmittel) von 15000 g/mol (Ultramid® B3 der BASF AG) und einer Viskositätszahl von 150 $cm^3/g$ (in Schwefelsäure nach ISO 307, DIN 53 727) bei 270 ° C aufgeschmolzen und mit 0,83 kg/h Tris-(p-hydroxyphenyl)-ethan bei 250 U/min vermischt. Die Mischung wurde als Strang ausgetragen, gekühlt und granuliert.

Beispiel 2

Es wurde wie in Beispiel 1 gearbeitet, jedoch wurden anstelle von 0,83 kg/h 1,74 kg/h Tris-(p-hydroxyphenyl)-ethan eingesetzt.

Beispiel 3

Es wurde wie in Beispiel 1 gearbeitet, jedoch wurden anstelle von 0,83 kg/h 2,73 kg/h Tris-(p-hydroxyphenyl)-ethan eingesetzt.

Beispiel 4

Auf einem Zweischneckenextruder (ZSK 53 von Werner & Pfleiderer) wurden 40 kg/h Polycaprolactam mit einem mittleren Molekulargewicht (Zahlenmittel) von 15000 g/mol (Ultramid® B3 der BASF AG) und einer Viskositätszahl von 150 $cm^3/g$ (in Schwefelsäure nach ISO 307, DIN 53 727) bei 280 °C aufgeschmolzen und mit 18,5 kg/h Glasfasern (Star Stran 761, 10 µ, Fa. Manville) und 3,1 kg/h Tris-(p-hydroxyphenyl)-ethan bei 120 U/min vermischt. Die Mischung wurde als Strang ausgetragen, gekühlt und granuliert.

Vergleichsbeispiel V1

Es wurde wie in Beispiel 1 gearbeitet, jedoch wurde kein Tris-(p-hydroxyphenyl)-ethan eingesetzt.

Vergleichsbeispiel V2

Es wurde wie in Beispiel 1 gearbeitet, jedoch wurden anstelle des Tris-(p-hydroxyphenyl)-ethans 1,74 kg/h Bisphenol-A eingesetzt.

Vergleichsbeispiel V3

Es wurde wie in Beispiel 4 gearbeitet, jedoch wurde kein Tris-(p-hydroxyphenyl)-ethan eingesetzt.

Vergleichsbeispiel V4

Es wurde wie in Beispiel 4 gearbeitet, jedoch wurden anstelle des Tris-(p-hydroxyphenyl)-ethans 3,1 kg/h Bisphenol-A eingesetzt.

Ein Teil der Granulate aus den Beispielen 1 bis 4 und den Vergleichsbeispielen V1 bis V4 wurde jeweils nach dem Trocknen bei 80 °C und einem Druck von 40 mbar zu Schulterstäben, wie sie für Festigkeitsmessungen nach DIN 53 455 verwendet werden, bei 280 °C verspritzt. Ein anderer Teil dieser Granulate wurde jeweils auf einer Spritzgußmaschine des Typs BSKM 400 zu Testkästchen (in Anlehnung an die Schrift "Ultramid" (Reihe: BASF-Kunststoffe, Ausgabe 6/1985, Abbildung 7, Seite 14) verarbeitet.

Der Elastizitätsmodul (E-Modul) wurde nach DIN 53 457 bestimmt, die Zugfestigkeit nach DIN 53 455. Die Wasseraufnahme wurde nach 25 Tagen Lagerung in Wasser bei 30 °C gemessen.

Außerdem wurde die Oberfläche visuell beurteilt.

Die Wärmeformbeständigkeit wurde nach DIN 53 461 bestimmt.

Die Eigenschaften der Abmischungen sind in der Tabelle zusammengestellt.

Tabelle

| Beispiele | ohne Glasfasern | | | | | mit Glasfasern | | |
|---|---|---|---|---|---|---|---|---|
| | 1 | 2 | 3 | V1 | V2 | 4 | V3 | V4 |
| Polyamid (Gew.-%) | 96 | 92 | 88 | 100 | 92 | 65 | 70 | 65 |
| Phenol* | THPE | THPE | THPE | - | BP-A | THPE | - | BP-A |
| (Gew.-%) | 4 | 8 | 12 | - | 8 | 5 | - | 5 |
| Füllstoff (Gew.-%) | - | - | - | - | - | 30 | 30 | 30 |
| E-Modul (N/mm³) | 3150 | 3100 | 3050 | 3100 | 3100 | 8650 | 8600 | 8550 |
| Festigkeit (N/mm³) | 81 | 80 | 74 | 82 | 82 | 181 | 180 | 178 |
| Wasseraufnahme (Gew.-%) | 7.4 | 6.0 | 5.3 | 9.5 | 6.1 | 4.3 | 6.5 | 4.2 |
| Wärmeformbeständigkeit (°C) | 70 | 65 | 60 | 68 | 62 | 196 | 208 | 190 |
| Belag (mg) | < 1 | < 1 | 2 | < 1 | 5 | < 1 | < 1 | 3 |
| Oberflächenqualität | gut | sehr gut | sehr gut | gut | gut | gut | mäßig | gut |

* THPE = Tris(p-hydroxyphenyl)ethan; BP-A = Bisphenol-A

## Patentansprüche

**1.** Thermoplastische Polyamid-Formmassen, enthaltend als wesentliche Komponenten
A) 39 bis 99 Gew.-% eines Polyamids oder eine Mischung verschiedener Polyamide und

B) 1 bis 30 Gew.-% eines Phenols der allgemeinen Formel I

$R_3E$ I,

wobei

R =

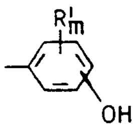

,

R' = $C_1$-$C_4$-Alkyl, m = 0 bis 4

E = ein trivalenter, aliphatischer $C_1$-$C_{10}$-Kohlenwasserstoffrest, Triazin-triyl, ein dreiwertiger $C_6$- oder $C_{10}$-Aryl-Rest

und

c) 0 bis 60 Gew.%, bezogen auf die Polyamidmenge faser- oder teilchenförmige Füllstoffe oder deren Mischungen.

**2.** Verfahren zur Herstellung von thermoplastischen Polyamid-Formmassen gemäß Anspruch 1, dadurch gekennzeichnet, daß man

A) 39 bis 99 Gew.-% eines Polyamids oder eine Mischung verschiedener Polyamide und

B) 1 bis 30 Gew.-% eines Phenols der allgemeinen Formel I

$R_3E$ I,

wobei

R =

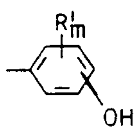

,

R' = $C_1$-$C_4$-Alkyl, m = 0 bis 4

E = ein trivalenter, aliphatischer $C_1$-$C_{10}$-Kohlenwasserstoffrest, Triazin-triyl, ein dreiwertiger $C_6$- oder $C_{10}$-Aryl-Rest

und

c) 0 bis 60 Gew.%, bezogen auf die Polyamidmenge faser- oder teilchenförmige Füllstoffe oder deren Mischungen, miteinander mischt.

**3.** Verwendung der thermoplastischen Formmassen gemäß Anspruch 1 zur Herstellung von Fasern, Folien und Formkörpern.

**4.** Formkörper, erhältlich aus thermoplastischen Formmassen gemäß Anspruch 1.